# EUROPÄISCHE PATENTSCHRIFT

(11) **EP 1 275 287 B1**
(45) Veröffentlichungstag und Bekanntmachung des Hinweises auf die Patenterteilung: **05.04.2006**
(21) Anmeldenummer: 02014747.6
(22) Anmeldetag: 04.07.2002
(51) Int. Cl.: A01D 41/14

(54) **Schneidwerk für Erntemaschinen**
Header for harvesting machines
Tablier de coupe pour machines de récolte

(30) Priorität: 12.07.2001 DE 10133105
(43) Veröffentlichungstag der Anmeldung: 15.01.2003
(73) Patentinhaber: CLAAS Selbstfahrende Erntemaschinen GmbH, 33428 Harsewinkel (DE)
(72) Erfinder: Bürmann, Dominik, 33415 Verl (DE)

(56) Entgegenhaltungen:
- EP-A- 0 248 926
- FR-A- 1 449 224
- US-A- 3 168 800
- US-A- 3 742 690
- US-A- 4 011 709
- US-A- 4 206 583
- US-A- 4 407 110
- US-A- 4 573 308
- US-A- 4 660 360
- US-A- 4 665 685
- US-A- 4 729 212
- US-A- 4 835 954
- US-A- 5 924 270

## Beschreibung

Die Erfindung bezieht sich auf ein Schneidwerk für Erntemaschinen, insbesondere für selbstfahrende Mähdrescher, sowohl für die Ernte von Getreide als auch von Erntegut mit niedrig liegenden Fruchtständen, nach dem Oberbegriff des Patentanspruches 1.

Derartige Schneidwerke mit wahlweise starren oder flexiblen Mähbalken und Mähmessern sind bereits in verschiedenen Ausführungen bekannt. So ist beispielsweise in der DE 34 41 209 A1 ein universell für die Getreide- und Bohnenernte einsetzbares Schneidwerk beschrieben, das mehrere nebeneinander angeordnete Gleitkufen aufweist, die über je zwei sich in Fahrtrichtung erstreckende Tragarme mit der Schneidwerksmulde gelenkig verbunden sind. Dabei weisen die beiden, die Gleitkufen tragenden Tragarme und die Gleitkufen, Durchgangsbohrungen auf, durch die bei der Getreideernte eine Arretierschraube gesteckt und mit einer Gewindehülse an einem Träger der Schneidwerksmulde verschraubt wird. Dadurch ist keine vertikale Bewegung der Gleitkufe in Bezug auf die Schneidwerksmulde mehr möglich. Bei der Bohnenernte wird die Schraubverbindung gelöst, sodass sich die Gleitkufen entsprechend dem jeweiligen Bodenprofil nach oben oder unten frei bewegen können. Obwohl dieses Schneidwerk die funktionellen Erfordernisse beim Ernteeinsatz im Wesentlichen erfüllt, haften ihm dennoch verschiedene Nachteile an. Insbesondere erfordert eine Vielzahl der vorhandenen störungsanfälligen Gelenkverbindungen einen hohen Wartuags- und Instandhaltungsaufwand. Darüber hinaus ist bei der Umrüstung des Schneidwerkes auf verschiedene Erntegüter ein großer Arbeitsaufwand notwendig. Durch die jeweils erforderlichen zwei Tragarme für eine Gleitkufe ergibt sich eine zusätzliche, hohe Gewichtsbelastung für das Schneidwerk. Infolge der ungünstigen Oberflächenbeschaffenheit weisen die Gleitkufen, insbesondere auf lehmhaltigen Böden schlechte Gleiteigenschaften auf.

Der Erfindung liegt die Aufgabe zugrunde, die Gleitkufen so auszuführen und anzuordnen, dass eine störungsfreie Funktionsweise unter allen Erntebedingungen gewährleistet ist, und dass der Wechsel von Ausrüstungsvarianten auf einfache Weise mit einem geringen Arbeitszeitaufwand durchgeführt werden kann.

Erfindungsgemäß wird diese Aufgabe durch die im Patentanspruch 1 genannten Merkmale gelöst. Weitere vorteilhafte Ausführungen des Erfindungsgegenstandes ergeben sich aus den nachgeordneten Ansprüchen.

Durch die vorteilhafte erfindungsgemäße Ausführung der Gleitkufen und deren Arretiervorrichtung in der oberen Stellung wird mit einem geringen Herstellungsaufwand eine universelle Einsatzmöglichkeit für verschiedene Erntegüter erreicht. Durch die Verwendung von Kunststoff sind die Gleitkufen selbstfedernd ausgebildet, sodass eine störungsanfällige mechanische Gelenkverbindung mit der Schneidwerksmulde nicht erforderlich ist. Die nicht haftende Oberfläche ermöglicht insbesondere bei nassen und klebrigen Bodenverhältnissen ein wesentlich besseres Gleiten über den Feldboden.

Die Erfindung wird nachstehend an zwei Ausführungsbeispicien näher erläutert. In den zugehörigen Zeichnungen zeigen
- Fig.1: eine perspektivische Ansicht auf den unteren Bereich eines Schneidwerkes mit Gleitkufen, die über eine Seilzugeinrichtung in die obere Stellung gebracht und dort gehalten werden,
- Fig.2: den Schnitt II-II nach Fig.1,
- Fig.3: den Schnitt III-III nach Fig.1,
- Fig.4: einen Querschnitt durch den unteren Bereich eines Schneidwerkes mit Gleitkufen , die nach Fig.1 mittels einer Seilzugeinrichtung in die obere Stellung gebracht werden,
- Fig.5: eine perspektivische Ansicht auf den unteren Bereich eines Schneidwerkes mit Gleitkufen, die mit Schwenkhaken in der oberen Stellung gehalten werden,
- Fig.6: einen Querschnitt durch den unteren Bereich eines Schneidwerkes mit Gleitkufen, die nach Fig.5 mit Schwenkhebeln in der oberen Stellung gehalten werden.

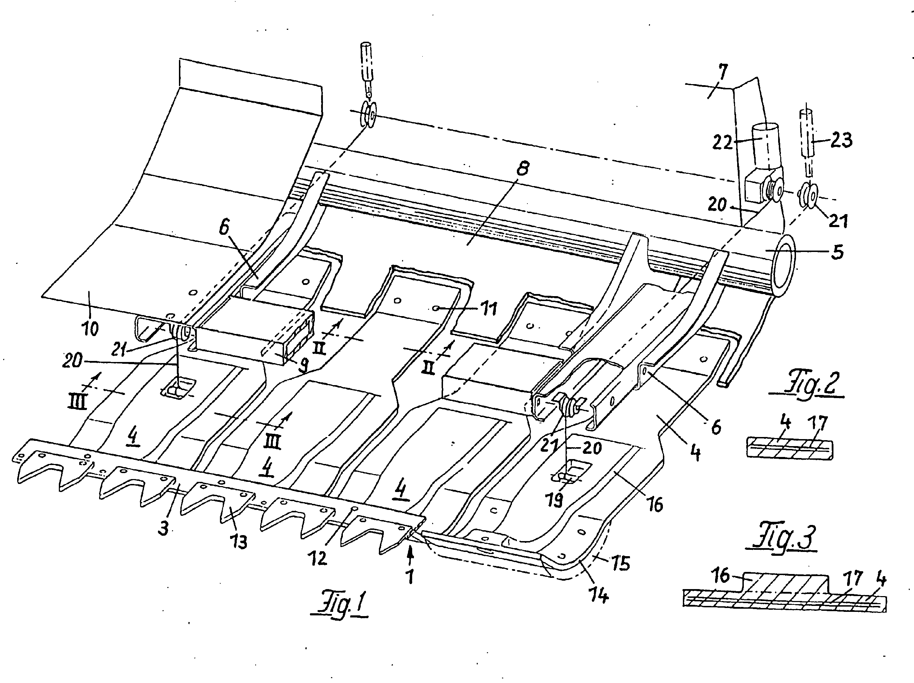

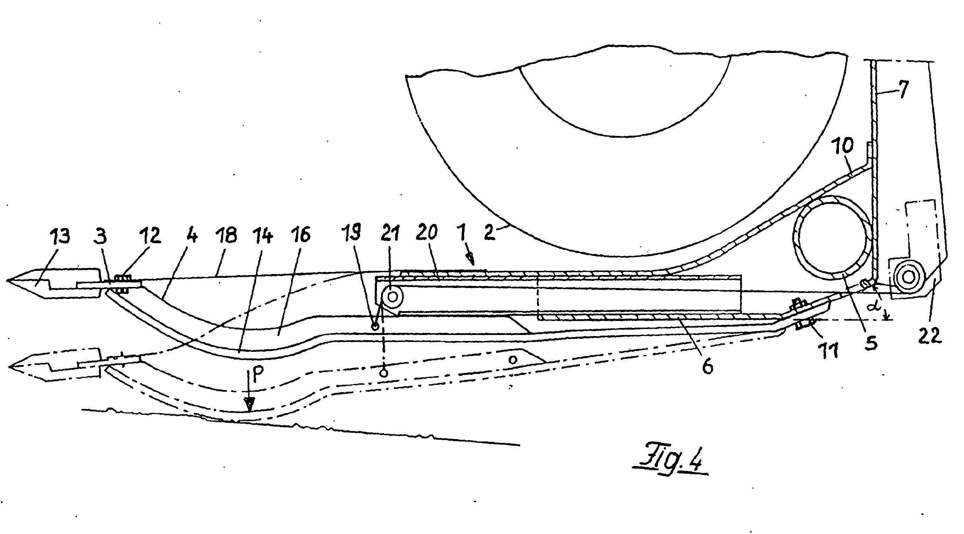

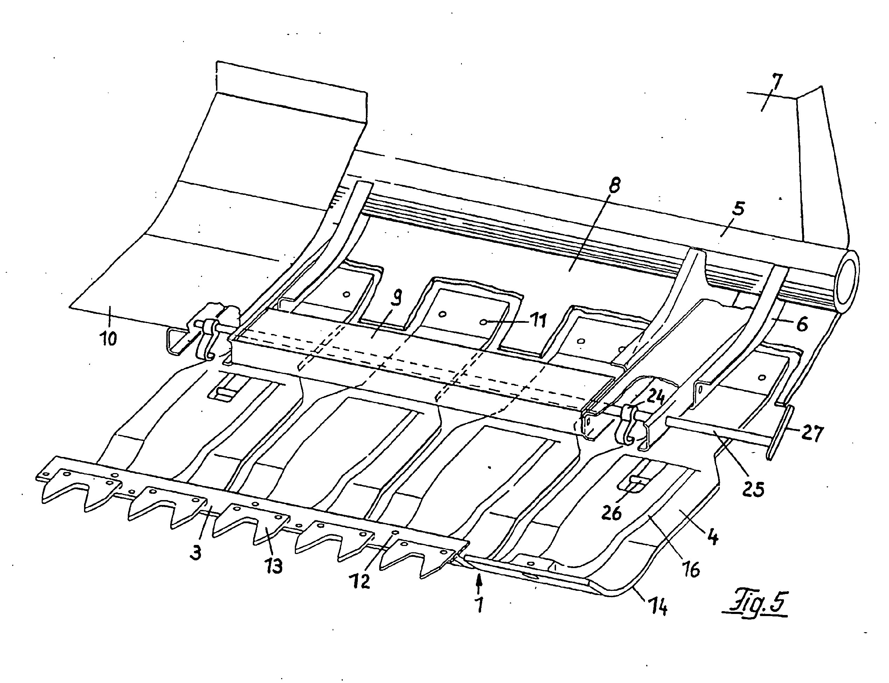

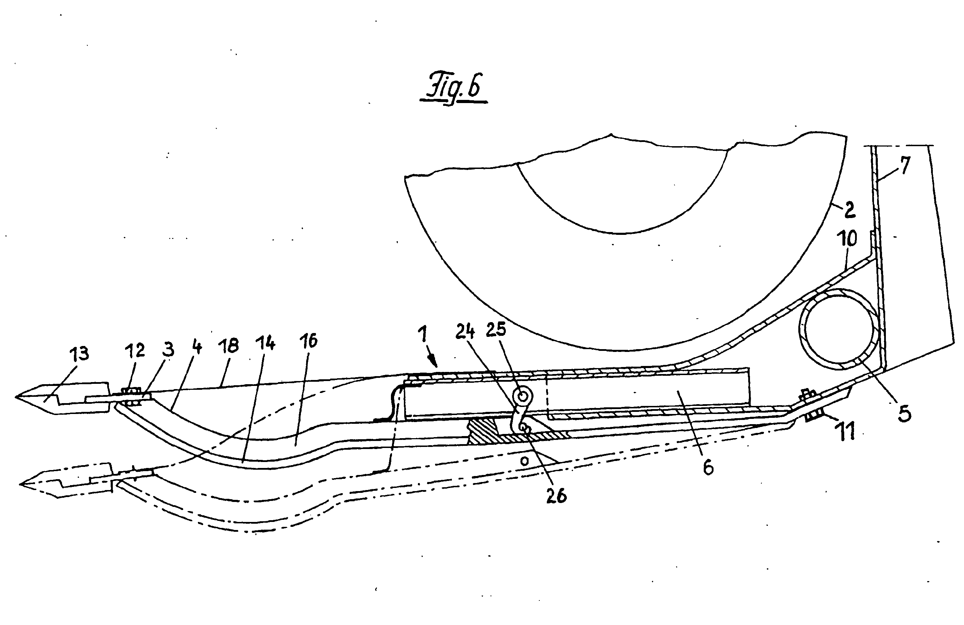

Zum Schnitt des Erntegutes ist an der Vorderseite eines in der Zeichnung nicht dargestellten Mähdreschers ein Schneidwerk angeordnet. Es umfasst im Wesentlichen eine Schneidwerksmulde 1, eine Einzugsförderschnecke 2, einen flexiblen Mähbalken 3 mit Mähmesser und eine Vielzahl nebeneinander angeordneter Gleitkufen 4. Im hinteren unteren Bereich der Schneidwerksmulde 1 ist ein über die gesamte Breite durchgehendes Tragrohr 5 angeordnet, an dem in Abständen etwa horizontal verlaufende profilierte Bodenträger 6 sowie die Rückwand 7 befestigt sind. Zwischen jeweils zwei benachbarten Bodenträgern 6 sind quer verlaufende Verbindungsplatten 8 und Profilträger 9 zur Stabilisierung der Schneidwerksmulde 1 angeordnet. Oberhalb der Verbindungsplatten 8 und Profilträger 9 ist ein Bodenblech 10 angebracht, das sich über die gesamte Breite der Schneidwerksmulde 1 erstreckt und aus einzelnen Sektionen besteht. Die aus einem selbstfedernden und glattflächigen Kunststoff mit guten Gleitfähigkeitseigenschaften bestehenden Gleitkufen 4 sind an ihren rückwärtigen Enden über Schraubverbindungen 11 unmittelbar an den Verbindungsplatten 8 oder anderen bodenseitigen Rahmenteilen der Schneidwerksmulde 1 starr befestigt. Gleichfalls über Schraubverbindungen 12 sind die vorderen Enden der Gleitkufen 4 mit dem Mähbalken 3 verbunden. Am Mähbalken 3 sind in bekannter Weise die Mähfinger 13 und ein nicht dargestelltes Mähmesser angeordnet. Im vorderen Bereich weisen die Gleitkufen 4 eine zum Feldboden gerichtete Wölbung 14 auf, die im Wesentlichen den Bodenkontakt herstellt. Da diese Wölbung 14 einer hohen Beanspruchung unterliegt, ist sie bodenseitig mit einer zusätzlichen auswechselbaren Auflage 15 versehen. Dadurch kann bei einem aufgetretenen Verschleiß dieser Bereich durch einfaches Auswechseln der Auflage 15 die volle Funktionsfähigkeit wiederhergestellt werden. Zur Erhöhung der Widerstandsfähigkeit sind die Gleitkufen 4 an ihrer Oberseite mit einer angeformten oder aufschraubbaren Verstärkung 16 versehen. In den stark beanspruchten Bereichen sind des weiteren Einlagen 17 aus einem hochfesten flexiblen Werkstoff als Armierung angeordnet (Fig.2 und Fig.3), die das Widerstandsmoment und die Standzeit der Gleitkufen 4 erhöhen. Zwischen dem Mähbalken 3 und den Profilträgern 9 sind flexible Platten 18 angeordnet, die den vertikalen Bewegungen der Gleitkufen 4 folgen und das Erntegut in Richtung zur Einzugsförderschnecke 2 leiten. Das erfindungsgemäße Schneidwerk ist sowohl für die Ernte von Getreide als auch von Bohnen oder anderen Erntegütern mit niedrig liegenden Fruchtständen geeignet. Während bei der Getreideernte das Schneidwerk in einem Abstand über dem Feldboden geführt wird und das Mähmesser in einer geradlinigen Ebene die Halme schneidet, wird bei der Bohnenernte das Schneidwerk so weit abgesenkt, dass die Gleitkufen 4 über die gesamte Schneidwerksbreite einen Bodenkontakt aufweisen und der flexible Mähbalken 3 mit dem Mähmesser sich quer zur Fahrtrichtung elastisch federnd dem ständig wechselnden Bodenprofil anpasst und in allen Bereichen des Mähmessers eine optimale geringe Schnitthöhe erreicht wird. Bei der Umstellung des Schneidwerkes von der Bohnenernte auf Getreideernte wird die vertikale Bewegungsmöglichkeit der Gleitkufen 4 aufgehoben, indem sie an der Unterseite des Profilträgers 9 zur Anlage gebracht und in dieser Stellung arretiert werden. Die Arretierung der Gleitkufen 4 erfolgt dabei in zwei verschiedenen Varianten. Nach der Fig.1 und 4 dargestellten Ausführung werden die Gleitkufen 4 mittels einer Seilzugeinrichtung in die obere Stellung gebracht. Hierzu ist an je einer in den seitlichen Endbereichen des Schneidwerkes angeordneten und einem Bodenträger 6 zugeordneten Gleitkufe 4 an einem Bolzen 19 und ein Zugseil 20 befestigt, das über Umlenkrollen 21 zu einem an der Rückwand 7 angeordneten Drehantrieb 22 oder Zugantrieb 23 führt. In der Fig.1 ist der Drehantrieb 22 mit Voll-Linien und der Zugantrieb 23 mit Strich-Punkt-Linien dargestellt. Beide elektrisch oder hydraulisch betätigten Antriebe werden vom Fahrerstand der Erntemaschine aus bedient. Durch den Seilzuganirieb werden die Gleitkufen 4 bis zum Anschlag an den Profilträger 9 angehoben und in dieser Stellung gehalten. Damit ist keine Bewegung der Gleitkufen 4 mehr möglich und das Schneidwerk für die Getreideernte einsetzbar. Nach Aufhebung der Arretierung bewegen sich die Gleitkufen 4 durch das Eigengewicht bis auf den Feldboden nach unten. In dieser Stellung ist dann das Schneidwerk wieder für die Bohnenernte nutzbar. Bei der Ausführung nach den Fig.5 und 6 erfolgt die Arretierung der Gleitkufen 4 in der oberen Stellung mittels Schwenkhaken 24. Hierzu sind die auf einer innerhalb der Profikräger 9 verlaufenden durchgehenden Welle 25 angeordneten Schwenkhaken 24 mit an den Gleitkufen 4 befestigten Einhängebolzen 26 verriegelbar. Die Schwenkhaken 24 und die Einhängebolzen 26 sind jeweils einem Bodenträger 6 zugeordnet. Vor der Umrüstung des Scheidwerkes von der Bohnen- auf die Getreideernte wird das Schneidwerk auf einer ebenen Bodenoberfläche abgesenkt. Dadurch kommt es zu einer Anlage der Gleitkufen 4 an die Unterseite der Profilträger 9. Mittels eines am äußeren Ende der Welle 25 angeordneten Handhebels 27 werden nunmehr die Schwenkhaken 24 nach unten geschwenkt und mit den Einhängebolzen 26 der Gleitkufen 4 verbunden, sodass der Mähbalken 3 über seine gesamte Breite in der oberen Endlage gehalten wird. In dieser Stellung ist das Schneidwerk für die Getreideernte einsetzbar. Das Lösen der Arretierung erfolgt durch die Betätigung des Handhebels 27. Dadurch wird die Welle 25 gedreht und die Verbindung der Schwenkhaken 24 mit dem Einhängebolzen 26 unterbrochen, sodass sich die Gleitkufen 4 nach unten auf den Feldboden bewegen. Die einzelnen Gleitkufen 4 können sich damit wieder entsprechend dem Bodenprofil unabhängig voneinander in vertikaler Richtung bewegen und den Mähbalken 3 mit dem Mähmesser in einem geringen Abstand über dem Feldboden bei der Bohnenernte führen.

Um zudem über die Gleitkufen 4 eine Entlastung des die Gleitkufen 4 aufnehmenden Schneidwerks und des Trägerfahrzeugs erreichen zu können, ist der von den Gleitkufen 4 auf den Boden wirkende Auflagedruck p einstellbar. In einer ersten Ausführungsform gemäß Figur 4 kann dies durch eine Änderung des Montagewinkels α unter dem die jeweilige Gleitkufe 4 in ihrem rückwärtigen Bereich mit dem Rahmenteil 8 der Schneidwerksmulde 1 verbunden ist erfolgen. Es liegt im Rahmen der Erfindung, dass diese Änderung des Montagewinkels α durch Änderung des Neigungswinkels des rückwärtigen Endes der Gleitkufe 4 oder durch Einfügen von keilförmigen Distanzstücken im Bereich der Schraubverbindungen 11 zwischen dem Rahmenteil 8 der Schneidwerksmulde 1 und der jeweiligen Gleitkufe 4 realisierbar ist. In einer weiteren nicht näher dargestellten Ausführungsform kann die Änderung des Auflagedrucks p einer oder mehrerer Gleitkufen 4 auch dadurch erreicht werden, dass Gleitkufen 4 mit unterschiedlicher Materialdicke und/oder verschiedenen Materialeigenschaften eingesetzt werden.

### Bezugszeichenliste

- 1.: Schneidwerksmulde
- 2.: Einzugsförderschnecke
- 3.: Mähbalken
- 4.: Gleitkufen
- 5.: Tragrohr
- 6.: Bodenträger
- 7.: Rückwand
- 8.: Verbindungsplatten
- 9.: Profilträger
- 10.: Bodenblech
- 11.: Schraubverbindungen
- 12.: Schraubverbindungen
- 13.: Mähfinger
- 14.: Wölbung
- 15.: Auflage
- 16.: Verstärkung
- 17.: Einlagen
- 18.: Platten
- 19.: Bolzen
- 20.: Zugseil
- 21.: Umlenkrollen
- 22.: Drehantrieb
- 23.: Zugantrieb
- 24.: Schwenkhaken
- 25.: Welle
- 26.: Einhängebolzen
- 27.: Handhebel

## Patentansprüche

1. Schneidwerk für Erntemaschinen, insbesondere für selbstfahrende Mähdrescher, sowohl für die Ernte von Getreide als auch von Erntegut mit niedrig liegenden Fruchtständen, beispielsweise von Sojabohnen, mit einem Mähbalken (3), der über mehrere nebeneinander in Fahrtrichtung verlaufende Gleitkufen (4) wahlweise gelenkig oder flexibel mit der Schneidwerksmulde (1) verbunden ist und die Gleitkufen (4) zwischen einer unteren und oberen Stellung in vertikaler Richtung bewegbar sind oder in der oberen Stellung über eine im vorderen Bereich angeordnete Arretiervorrichtung feststellbar sind,
**dadurch gekennzeichnet,**
**dass** die Gleitkufen (4) an ihren rückwärtigen Enden über starre Schraubverbindungen (11) unmittelbar an Rahmenteilen der Schneidwerksmulde (1) befestigt sind und dass die Gleitkufen (4) über eine Seilzugeinrichtung (19-23) in die obere Stellung anhebbar und arretierbar sind.

2. Schneidwerk nach Anspruch 1,
**dadurch gekennzeichnet,**
**dass** die Gleitkufen (4) über Schwenkhaken (24) und mitwirkende Einhängebolzen (26) in der oberen Stellung arretierbar sind.

3. Schneidwerk nach Anspruch 1
**dadurch gekennzeichnet,**
**dass** die Seilzugeinrichtung (19-23) vom Fahrerstand der Erntemaschine aus bedienbar und elektrisch oder hydraulisch antreibbar ist.

4. Schneidwerk nach einem oder mehreren der vorhergehenden Ansprüche,
**dadurch gekennzeichnet,**
**dass** an jedem Seitenbereich des Schneidwerkes eine Seilzugeinrichtung angeordnet ist, wobei an zumindest einer, einem Bodenträger (6) zugeordneten Gleitkufe (4) an einem Bolzen (19) ein Zugseil (20) befestigt ist, das über Umlenkrollen (21) zu einem an der Rückwand (7) des Scheidwerkes angeordneten Drehantrieb (22) oder Zugantrieb (23) führt.

5. Schneidwerk nach einem oder mehreren der vorhergehenden Ansprüche,
**dadurch gekennzeichnet,**
**dass** der wenigstens ein Schwenkhaken (24) auf einer innerhalb der Profilträger (9) verlaufenden durchgehenden Welle (25) im Bereich eines Bodenträgers (6) und der wenigstens eine mitwirkende Einhängebolzen (26) in einer unmittelbar darunter liegenden Gleitkufe (4) befestigt ist und dass am äußeren Ende der Welle (25) ein Handhebel (27) angeordnet ist.

6. Schneidwerk nach Anspruch 4,
**dadurch gekennzeichnet,**
**dass** der durchgehenden Welle (25) eine Vielzahl von Schwenkhaken (24) und mit diesen Schwenkhaken (24) zusammenwirkende Einhängebolzen (26) zugeordnet sind.

7. Schneidwerk nach Anspruch 1,
**dadurch gekennzeichnet,**
**dass** der Auflagedruck (p) wenigstens einer Gleitkufe (4) einstellbar ist.

8. Schneidwerk nach Anspruch 7,
**dadurch gekennzeichnet,**
**dass** die Einstellbarkeit des Auflagedrucks (p) durch Änderung des Montagewinkeis (α) der wenigstens einen Gleitkufe (4) an dem Rahmenteil (8) der Schneidwerksmulde (1) erfolgt.

9. Schneidwerk nach einem oder mehreren der Ansprüche 7 und 8,
**dadurch gekennzeichnet,**
**dass** die Einstellbarkeit des Auflagedrucks (p) durch den Einsatz von Gleitkufen (4) mit unterschiedlicher Materialstärke und/oder verschiedenen Materialeigenschaften erreicht wird.

10. Schneidwerk nach einem oder mehreren der vorhergehenden Ansprüche,
**dadurch gekennzeichnet,**
**dass** die Gleitkufen (4) aus einem selbstfederndem und glattflächigem Kunststoff bestehen.

11. Schneidwerk nach einem oder mehreren der vorhergehenden Ansprüche,
**dadurch gekennzeichnet,**
**dass** die Gleitkufen (4) im vorderen Bereich eine zum Feldboden gerichtete Wölbung (14) aufweisen.

12. Schneidwerk nach Anspruch 11
**dadurch gekennzeichnet,**
**dass** die Wölbung (14) bodenseitig mit einer auswechselbaren Auflage (15) versehen ist.

13. Schneidwerk nach einem oder mehreren der vorhergehenden Ansprüche,
**dadurch gekennzeichnet,**
**dass** die Gleitkufen (4) an ihrer Oberseite mit einer angeformten oder aufschraubbaren Verstärkung (16) versehen sind.

14. Schneidwerk nach einem oder mehreren der vorhergehenden Ansprüche,
**dadurch gekennzeichnet,**
**dass** in den hoch beanspruchten Bereichen der Gleitkufen (4) Einlagen (17) aus hochfestem, flexiblen Werkstoff angeordnet sind.

## Claims

1. A cutting mechanism for harvesters, in particular for self-propelled combine harvesters, both for harvesting grain and also crop material involving low-level crop positions, for example soya beans, comprising a mowing bar (3) which is connected selectively hingedly or flexibly to the cutting mechanism trough (1) by way of a plurality of skids (4) extending in mutually juxtaposed relationship in the direction of travel, and the skids (4) are movable in a vertical direction between an upper and a lower position or can be fixed in the upper position by way of an arresting device arranged in the front region,
**characterised in that**
at their rearward ends the skids (4) are fixed by way of rigid screw connections (11) directly to frame portions of the cutting mechanism trough (1) and that the skids (4) can be lifted into and arrested in the upper position by way of a cable device (19-23).

2. A cutting mechanism according to claim 1 **characterised in that** the skids (4) can be arrested in the upper position by way of pivotal hooks (24) and co-operating engagement pins (26).

3. A cutting mechanism according to claim 1 **characterised in that** the cable device (19-23) is operable from the driving position of the harvester and is electrically or hydraulically drivable.

4. A cutting mechanism according to one or more of the preceding claims **characterised in that** a cable device is arranged at each side region of the cutting mechanism, wherein fixed at a pin (19) to at least one skid (4) associated with a base support (6) is a pulling cable (20) which goes by way of deflection rollers (21) to a rotary drive (22) or pulling drive (23) arranged at the rear wall (7) of the cutting mechanism.

5. A cutting mechanism according to one or more of the preceding claims **characterised in that** the at least one pivotal hook (24) is arranged on a continuous shaft (25) extending within the profile carrier (9) in the region of a base support (6) and the at least one co-operating engagement pin (26) is fixed in a skid (4) disposed directly therebeneath and that a hand lever (27) is arranged at the outer end of the shaft (25).

6. A cutting mechanism according to claim 4 **characterised in that** a plurality of pivotal hooks (24) and engagement pins (26) co-operating with said pivotal hooks (24) are associated with the continuous shaft (25).

7. A cutting mechanism according to claim 1 **characterised in that** the contact pressure (p) of at least one skid (4) is adjustable.

8. A cutting mechanism according to claim 7 **characterised in that** adjustability of the contact pressure (p) is effected by altering the mounting angle (α) of the at least one skid (4) on the frame portion (8) of the cutting mechanism trough (1).

9. A cutting mechanism according to one or more of claims 7 and 8 **characterised in that** adjustability of the contact pressure (p) is achieved by the use of skids (4) with different material thicknesses and/or varying material properties.

10. A cutting mechanism according to one or more of the preceding claims **characterised in that** the skids (4) comprise an inherently resilient and smooth-surfaced plastic material.

11. A cutting mechanism according to one or more of the preceding claims **characterised in that** in the front region the skids (4) have a curvature (14) directed towards the ground of the field.

12. A cutting mechanism according to claim 11 **characterised in that** the curvature (14) is provided at the ground side with an interchangeable contact means (15).

13. A cutting mechanism according to one or more of the preceding claims **characterised in that** at their top side the skids (4) are provided with a reinforcement (16) which is formed or can be screwed thereon.

14. A cutting mechanism according to one or more of the preceding claims **characterised in that** inserts (17) of high-strength, flexible material are arranged in the highly stressed regions of the skids (4).

## Revendications

1. Tablier de coupe pour des machines de récolte, notamment pour des moissonneuses-batteuses automotrices, destinées à la récolte aussi bien de céréales que de plantes dont la partie fruit se situe à une faible hauteur du sol, par exemple de soja, comprenant une barre de coupe (3) qui est reliée au choix de façon articulée ou flexible à l'auget (1) du tablier de coupe, par l'intermédiaire de plusieurs patins (4) disposés les uns à côté des autres dans le sens de la marche, les patins (4) pouvant être déplacés dans la direction verticale entre une position inférieure et une position supérieure ou pouvant être bloqués dans la position supérieure au moyen d'un dispositif de verrouillage installé dans la partie antérieure, **caractérisé en ce que** les patins (4), au niveau de leurs extrémités arrière, sont fixés directement à des éléments de cadre de l'auget (1) du tablier de coupe, par l'intermédiaire de liaisons à vis (11) rigides, et **en ce que** les patins (4) peuvent être soulevés et amenés dans la position supérieure par un mécanisme à câble (19-23) et être bloqués dans cette position.

2. Tablier de coupe selon la revendication 1, **caractérisé en ce que** les patins (4) peuvent être bloqués dans la position supérieure par des crochets pivotants (24) et des axes d'accrochage (26) associés.

3. Tablier de coupe selon la revendication 1, **caractérisé en ce que** le mécanisme à câble (19-23) peut être commandé depuis le poste de conduite de la machine de récolte et peut être entraîné par des moyens électriques ou hydrauliques.

4. Tablier de coupe selon une ou plusieurs des revendications précédentes, **caractérisé en ce qu'**un mécanisme à câble est disposé sur chaque côté du tablier de coupe, un câble de traction (20) étant fixé à un axe (19), sur au moins un patin (4) associé à un support à fond (6), lequel câble de traction passe sur des poulies de déviation (21) et mène à un dispositif d'entraînement en rotation (22) ou un dispositif d'entraînement en traction (23) installé sur la paroi arrière (7) du tablier de coupe.

5. Tablier de coupe selon une ou plusieurs des revendications précédentes, **caractérisé en ce que** le crochet pivotant (24), au nombre d'au moins un, est monté sur un arbre (25) traversant, s'étendant à l'intérieur des profilés-supports (9), dans la région d'un support à fond (6), et l'axe d'accrochage (26) associé, au nombre d'au moins un, est fixé dans un patin (4) situé directement en dessous et **en ce qu'**un levier à main (27) est disposé à l'extrémité extérieure de l'arbre (25).

6. Tablier de coupe selon la revendication 4, **caractérisé en ce qu'**une pluralité de crochets pivotants (24) et des axes d'accrochage (26), coopérant avec ces crochets pivotants (24), sont associés à l'arbre (25) traversant.

7. Tablier de coupe selon la revendication 1, **caractérisé en ce que** la pression d'appui (p) d'au moins un patin (4) est réglable.

8. Tablier de coupe selon la revendication 7, **caractérisé en ce que** le réglage de la pression d'appui (p) peut être effectué par modification de l'angle de montage (α) du patin (4), au nombre d'au moins un, sur l'élément de cadre (8) de l'auget (1) du tablier de coupe.

9. Tablier de coupe selon une ou plusieurs des revendications 7 ou 8, **caractérisé en ce que** le réglage de la pression d'appui (p) peut être effectué par utilisation de patins (4) ayant des épaisseurs de matériau différentes et/ou des propriétés de matériaux différentes.

10. Tablier de coupe selon une ou plusieurs des revendications précédentes, **caractérisé en ce que** les patins (4) sont réalisés à partir d'une matière plastique souple élastique et à surface lisse.

11. Tablier de coupe selon une ou plusieurs des revendications précédentes, **caractérisé en ce que** les patins (4) présentent dans leur partie antérieure une courbure (14) tournée en direction du sol.

12. Tablier de coupe selon la revendication 11, **caractérisé en ce que** la courbure (14) est pourvue, côté sol, d'une garniture (15) remplaçable.

13. Tablier de coupe selon une ou plusieurs des revendications précédentes, **caractérisé en ce que** les patins (4) sont pourvus, sur leur face supérieure, d'un élément de renfort (16) réalisé d'un seul tenant ou fixé par vissage.

14. Tablier de coupe selon une ou plusieurs des revendications précédentes, **caractérisé en ce que** des armatures (17) en un matériau souple à haute résistance sont disposés dans les zones fortement sollicitées des patins (4).
